# EUROPEAN PATENT SPECIFICATION

(11) **EP 3 119 053 B1**
(45) Date of publication and mention of the grant of the patent: **11.09.2019**
(21) Application number: 15176834.8
(22) Date of filing: 15.07.2015
(51) Int. Cl.: H04L 29/06, H04W 12/02, H04W 12/06

(54) **METHOD OF ESTABLISHING A DATA COMMUNICATION BETWEEN A MOBILE ENTITY AND THE INTERNET**
VERFAHREN ZUM AUFBAU EINER DATENKOMMUNIKATION ZWISCHEN EINER MOBILEN EINHEIT UND DEM INTERNET
PROCÉDÉ D'ÉTABLISSEMENT D'UNE COMMUNICATION DE DONNÉES ENTRE UNE ENTITÉ MOBILE ET INTERNET

(43) Date of publication of application: 18.01.2017
(73) Proprietor: Vodafone GmbH, 40549 Düsseldorf (DE)
(72) Inventor: KARAMPATSIS, Dimitrios, Ruislip HA4 6UH (GB); BINDRIM, Walter, 45721 Haltern am See (DE)
(74) Representative: Patentanwälte Bals & Vogel

(56) References cited:
- EP-A1- 1 758 310
- US-A1- 2013 216 043
- US-B1- 7 389 534

## Description

The present invention is related to a method of establishing a data communication between a mobile entity and the internet via e.g. a WiFi access point and a trusted connection.

It is already known that mobile entities, for example mobile devices like smart phones or tablets are used to connect to the internet via WiFi access points. Such so-called hotspots can also be public hotspots, which can be used to enter the internet. To do so, the respective mobile entity connects to the WiFi access point and establishes a data communication to the internet. Document EP1758310 discloses a method for avoiding double encryption on a trusted connection.

To ensure that also in public situations, the security of such a communication is kept high, the mobile entity and core network have to ensure a secure connection between the device and core network.. Currently there are two methods for ensuring a secure connection between the client and a core network. In one option, the mobile entity establishes on top of the data communication between the device and the core network a secure communication tunnel, for example, something like a virtual private network or the like. This is usually enabled by a respective securing request sent from the mobile entity to a respective authentication server or a virtual private network server. Another option is that the device considers the access as trusted and authenticates with the access by only providing its own credentials (i.e. SIM credentials).

In scenarios where traffic from the access point is routed towards the core network, if the client is not aware that a connection to a trusted access point has been established, the client may start a VPN-like authentication that results in the respective data communication to be sent twice over the core network and therefore the related data traffic is doubled during that process. Due to the fact that a data communication and the respective traffic is increasing significantly by the increasing usage of mobile entities, that increase of data traffic by touching respective parts of the network twice, is reducing in particular the speed and the quality of service of the data communication. Due to the fact that at least some of the services of that data communications are time-critical, the respective quality of service, which is evaluated by the user of the mobile entity, is significantly reduced. This is in particular true for voice over WiFi solutions, audio or video streaming concepts when traffic is routed from the access towards the core network also via the public internet.

It is an object of the present invention to overcome the discussed disadvantages at least partly. In particular, it is an object of the present invention to provide a method with reduced complexity and in particular reduced traffic within the network without reduction of security issues. The invention is disclosed in the appended claims.

Aforesaid object is achieved by a method according to independent claim 1 and a computer program product according to independent claim 9 of the present application. Further features and details of the invention result from the subclaims, the description and the figures. Features and details discussed with respect to the inventive method are also correlated with the inventive computer program product and the other way round.

According to the present invention, a method for establishing a data communication between a mobile entity and the internet is provided. The data communication takes place via an access point which offers a trusted access (e.g. for a WiFi access point, it would be a trusted air interface and trusted transport into the core network). The inventive method comprises the following steps:
- sending a communication request from the mobile entity to an authentication server via the trusted connection requesting establishment of the data communication,
- carrying out an authentication process of the mobile entity at the authentication server based on the communication request,
- sending a communication answer via the trusted connection from the authentication server to the mobile entity based on the results of the authentication process,
- blocking a securing process of securing the data communication at the mobile entity.

The inventive method is focused on the usage of trusted connections. In particular, also some public hotspots, so-called WiFi access points, are configured to comprise and provide trusted connections. For example, inside of a car, a respective WiFi hotspot as an access point can be provided to the users of mobile entities inside of the car. Such a WiFi access point of the car can use mobile network backhauling, for example LTE or 3G backhauling. The respective ongoing backhauling situation can be configured as a trusted connection.

The present invention can in particular be used for WiFi access points, which are described in the following description. However, all technical features of this description can also be used for wired access points.

Based on the general situation that now a trusted connection is already in charge for the data communication to be established, further protection as to security issues is no longer necessary. Due to the fact that generally known procedures on the devices or applications would still try to establish a secure communication tunnel, for example a VPN tunnel, such a generally known process would lead to unnecessary traffic and unnecessary complexity. It would lead to some kind of double securing situation, which is not needed in the present situation. It would also result in doubling the data send towards the mobile packet core as mobile traffic would traverse the packet core once via the trusted connection and then rerouted towards the core network via e.g. a VPN tunnel.

One core idea of the present invention is that in such a trusted communication situation, an additional securing process (e.g. the VPN tunnel) is avoided by blocking a respective e.g. VPN tunnel request process. The necessary activation of the blocking can come from in general different points of information. Some of the respective information, in particular respective information pieces of correlated answers of the authentication server are discussed in detail later. Of course, the blocking activity can take place in the mobile entity and/or as well in some server or any other part of the network. However, it is preferred if the blocking process is carried out within the mobile entity and therefore the blocking of the securing process will stop any communication coming from the mobile entity being correlated to an additional securing step.

As it can be seen from the discussion above, additional securing steps, coming from a securing process from the mobile entity, are at least partly avoided if the trusted connection is available. A trusted connection according to the present invention therefore avoids additional securing steps, and therefore complexity and in particular traffic load based on such additional securing steps is avoided. The reduction of complexity and traffic load further leads to a better usage of the bandwidth of the present network and leads therefore to a higher quality of service for the respective customer and user of the mobile entity.

If a respective WiFi access point is offering a trusted connection, the respective complexity of such WiFi access point can also be reduced due to the fact that additional securing process steps are not carried out due to the respective blocking step inside of the mobile entity. Therefore, beside the reduction of complexity of the respective procedure also the network structure in terms of hardware can be reduced within the respective WiFi access point and/or the respective connected network.

It is possible according to the present invention that the communication answer comprises a security information about the trusted connection and the securing process is blocked based on the security information. In such a case, the authentication server recognizes not only the mobile entity, but also the WiFi access point, through which the communication request is sent to the authentication server. By this security information, the authentication server can get some information with respect to the trustworthiness of the connection. Therefore, the authentication server is now in possession of the knowledge if the respective connection is trusted or not. In the case of a trusted connection, such a security information can be passed back via the communication answer to the mobile entity. Therefore, already before any securing process is started, the respective knowledge of the trusted connection is already possessed by the mobile entity. In such a situation, this is the earliest point in time where the respective information can be used for the blocking step of the securing process. For example, such security information can be an additional information being part of the respective communication answer.

According to aforesaid aspect of the invention, it is possible that the securing process is blocked before it has been started. A securing process, for example, can be a respective securing client, for example a virtual private network client running on the mobile entity. This could be part of an operating system of the mobile entity or an application running on the operating system of the mobile entity. Due to the fact that according to this aspect of the present invention, the information of the trustworthiness of the connection is already at the mobile entity before the securing process is started. The start of such securing process can be avoided right from the beginning on. Beside the reduction of complexity of the ongoing data communication coming from the mobile entity in this case, also the complexity of calculation steps within the mobile entity is reduced. The securing process does not have to be stopped within the mobile entity after it has been started, but it is also being blocked before it is started.

It is further possible that according to the present invention, the securing process is blocked by the following steps:
- sending a securing request (e.g. VPN tunnel request) from the mobile entity to the authentication server via the trusted connection requesting establishment of a secure communication tunnel,
- comparing the security request with the active authentication communication to the authentication server via the trusted connection,
- sending a securing answer from the authentication server to the mobile entity to block the securing process (the VPN tunnel process).

This aspect of the present invention can be carried out even when a securing process is generated for every single data communication and the respective requests. So in every case now the securing request is sent from the mobile entity to the respective authentication server. Due to the fact that the authentication server has the knowledge about the trustworthiness of the respective connection, the respective answer can be given back by the securing answer from the authentication server to the mobile entity. Therefore, the blocking of the securing process is carried out before any secured tunnel is established by the securing process. Beside the fact that the securing process is started in any case, this could be handled by any kind of process independently if a trusted connection is available or not. In the case, a trusted connection is not available, the securing process is not blocked and therefore carried out to establish the respective securing tunnel. If a trusted connection is available, the respective blocking step is carried out, and the securing process is blocked without establishment of the secure tunnel. This is the possibility to adapt the respective method for all kind of conditions, in particular trustworthy and none trustworthy situations.

In an aspect of the present invention according to aforesaid abstract, it is possible that the securing answer comprises a blocking information stopping the securing process from sending further securing requests. Due to the fact that the securing process is started at the mobile entity, a respective securing answer could lead to a situation where the securing process falls into a loop trying to send securing requests more than one single time. To stop that additional calculating complexity within the mobile entity, the blocking information can be part of the securing answer and therefore stopping securing process after the securing process has been blocked. In the case of a respective securing client running on the mobile entity, such securing client is blocked from carrying out the securing process after the securing answer with the included blocking information has been received by the mobile entity for that e.g. WiFi AP connection. If the device connects of course again or to a new/different WiFi AP the same procedure starts again.

It is also possible that according to the present invention the authentication is carried out based on identification information identifying the mobile entity and being part of the communication request. Such identification information, for example, can be a specific number identifying the mobile entity, in particular the IMSI or the MSISDN number of the mobile entity. Also further parameters of or code information, for example, the mobile phone number, the SIM card number, or a country code of a SIM card within the mobile entity can be used as an identification information. This is an easy and very simple possibility to carry out the authentication at the authentication server. The authenticator server uses the identify information provided in order to identify if two authentication sessions for the same access are active at the same time.

A further possibility is achieved if according to the present invention the WiFi access point comprises a mobile backhaul network. For example, the WiFi access point can be located within a car for offering a WiFi hotspot for the users of the car. Due to the fact that the car is mobile, a respective mobile backhaul, for example using an LTE or 3G network, can be used to carry out an inventive method. The mobile network for backhauling the WiFi access point in this case can be part of the trusted connection.

It is further possible that according to the present invention, the blocking of the securing process from the client comprises a step of comparing at least one parameter of the data communication with a list, in particular a black or white list which could be exchanged by actively by a server in the operator network like e.g. ANDSF (Access Network Discovery and Selection Function). This leads to further possibilities for reducing the complexity of the inventive method. A respective parameter of the data communication, for example, can be the IP address or any further information parameters that include information about the used WiFi access point and/or the trustworthiness of the connection. This is a possibility, where the information if a trusted connection is available or not can be put into the mobile entity. The list can in particular be stored in the mobile entity. A black list is a list with respective connection possibilities where no trusted connection is available. A white list on the other hand is a list comprising connections, which are definitely to be considered as trusted connections. Of course, it is also possible that the list is flexible and configured to be a learning list. Due to the carrying out of the inventive method, the list can be updated by each of the blocking steps of the respective method. If the inventive method gets the information that a connection is trustworthy, this information can be stored in correlation to this specific connection to be a trusted connection. Therefore, the list is updated and improves the reduction of complexity by carrying out the inventive method. In particular, without using of respective answer messages from the authentication server, this leads to improved possibilities in carrying out the inventive method. Nevertheless during the access authentication it must be clear that the access network is secure and is trusted.

A further aspect of the present invention is a computer program product being stored on a computer readable medium establishing a data communication between a mobile entity and the internet via a WiFi access point and a trusted connection, comprising the following:
- computer readable program means, initiating the computer to send a communication request from the mobile entity to an authentication server via the trusted connection requesting establishment of the data communication,
- computer readable program means, initiating the computer to carry out an authentication process of the mobile entity at the authentication server based on a communication request,
- computer readable program means, initiating the computer to send a communication answer via the trusted connection from the authentication server to the mobile entity based on the results of the authentication process,
- computer readable program means, initiating the computer to block a securing process of securing the data communication at the mobile entity.

According to the present invention, the computer program product can be characterized in computer readable program means, initiating the computer to carry out an inventive method. Thereby, the inventive computer program product comes up with the same possibilities and advantages, which have been discussed in detail with respect to the inventive method.

The present invention is discussed in more detail with respect to the accompanying drawings, which show schematically:
- Fig. 1: a first step of an inventive method,
- Fig. 2: a second step of an inventive method,
- Fig. 3: a third step of an inventive method,
- Fig. 4: a fourth step of an inventive method,
- Fig. 5: a further possibility of an inventive method,
- Fig. 6: a second step of the further possibility of the inventive method.

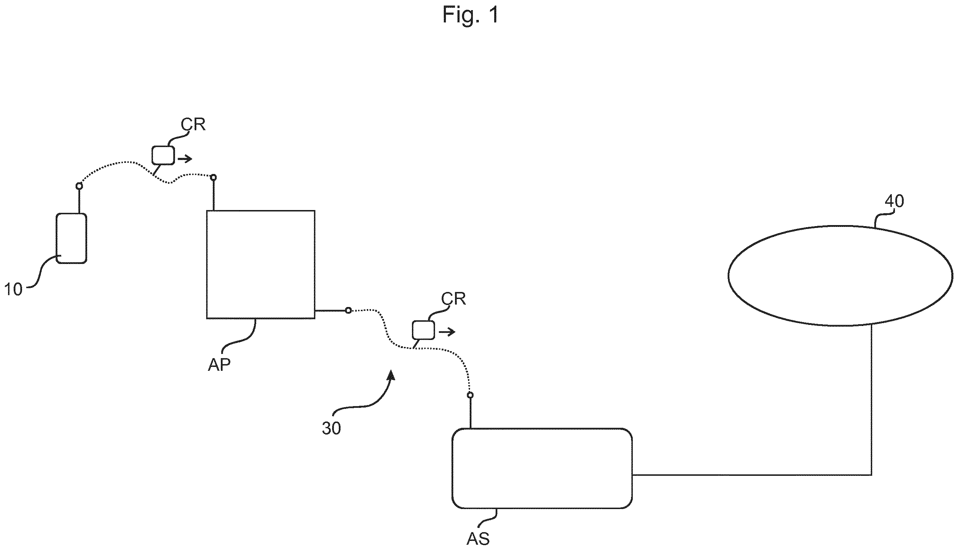

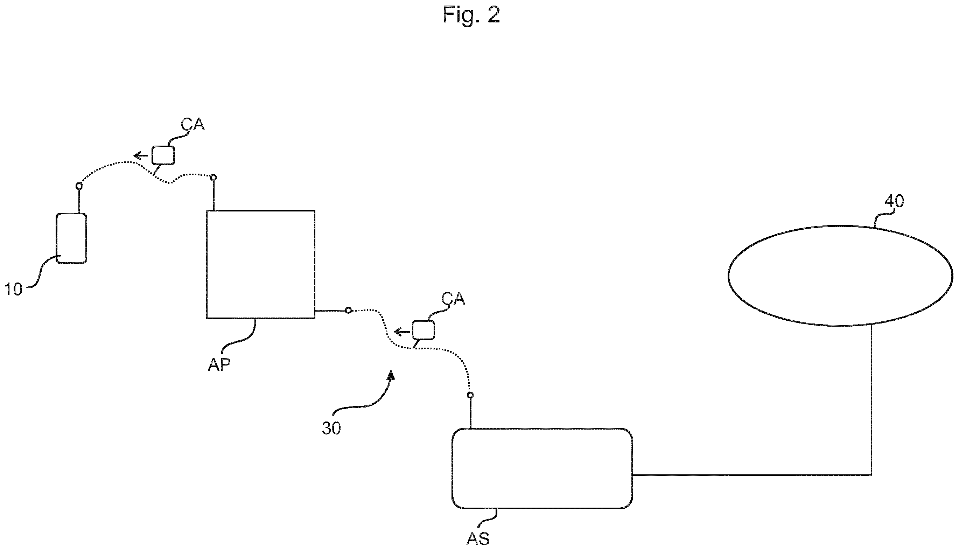

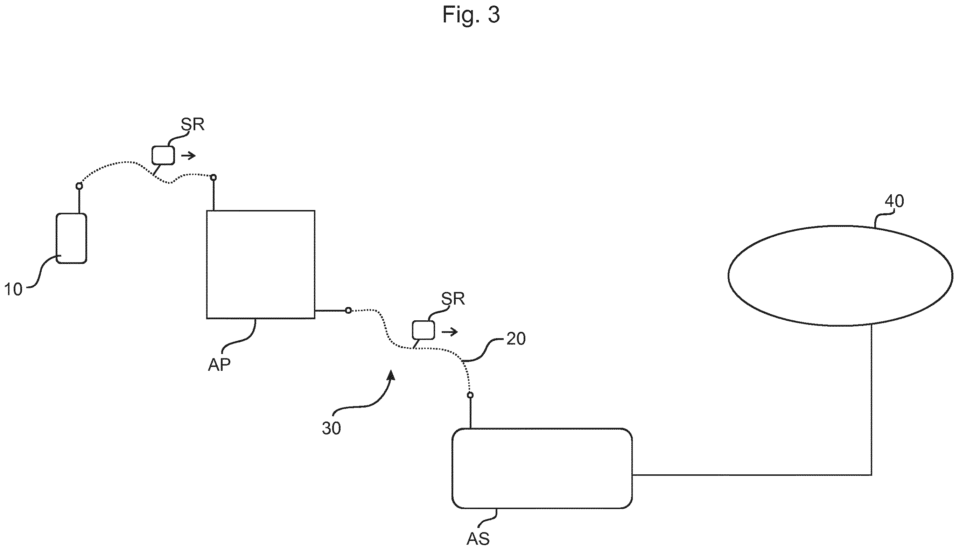

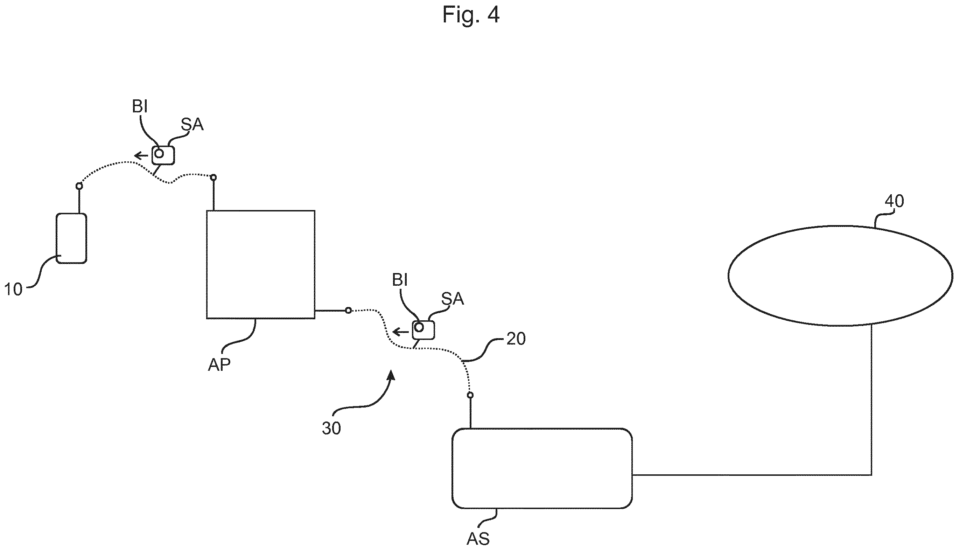

Figs. 1 to 4 show a first possibility for an inventive method. A mobile entity 10 is trying to establish a data communication 20 to the internet 40. Thereby, a communication request CR is sent to the WiFi access point AP, which in this case comprises a mobile network backhauling with a trusted connection 30. In this case, the communication request CR is passed on to the authentication server AS. Within the authentication server AS, an authentication process is carried out and thereby a communication answer CA is sent back to the mobile entity 10. After that step, the data communication 20 can be established. In a specific case, now a respective securing process is started within the mobile entity 10. This can be seen within figs. 3 and 4. To establish a secure tunnel, now a securing request SR is coming from the mobile entity 10 to the authentication server AS. Due to the fact that there is already an authentication communication 20 running on the trusted connection 30, the authentication server AS sends back a securing answer SA to the mobile entity, which can be seen in fig. 4. A part of that securing answer SA is a blocking information BI which stops the securing process from establishing the secure tunnel. The blocking information BI is further used to block the securing process to start once again to send further securing requests SR. This case can be used for trusted and untrusted connections 30, for example, it can be understood as a general process and method to be adapted to the respective trustworthiness of the connection.

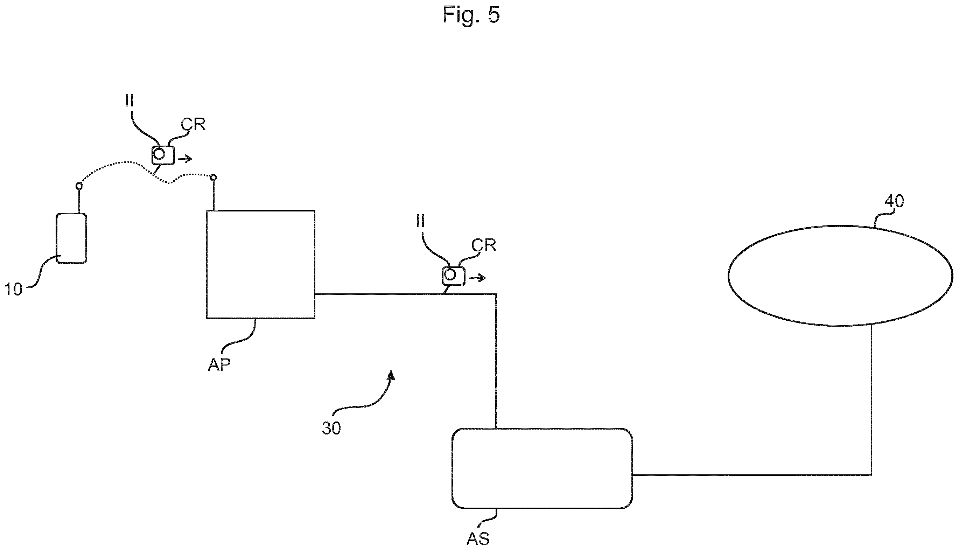

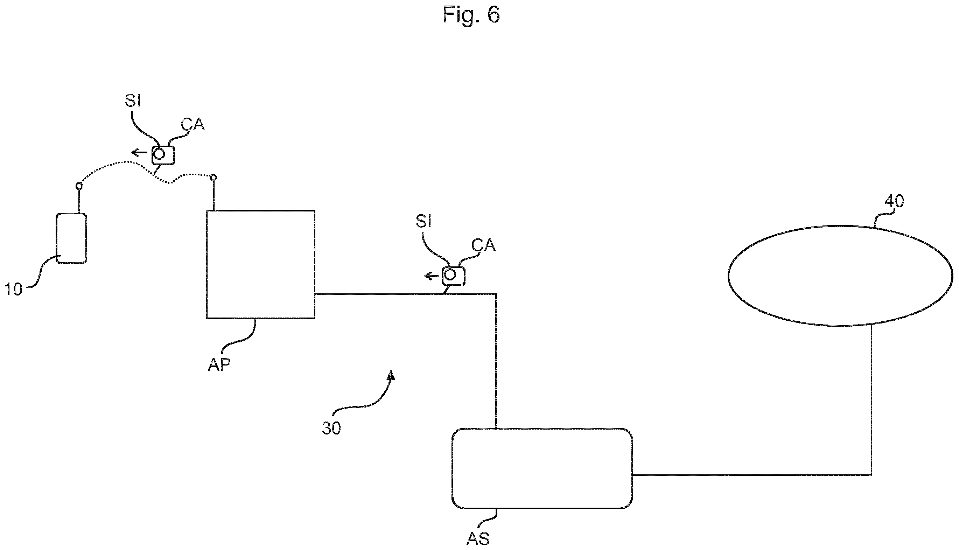

Figs. 5 and 6 show some further possibilities of the inventive method. In this case, the WiFi access point AP comprises a fixed line to the authentication server AS. Also, the communication requests CR is sent from the mobile entity 10 to the authentication server AS. To carry out the respective authentication process, the communication request CR comprises in this case identification information II. Furthermore, the respective communication answer CA in this case comprises security information SI. This leads to the information at the mobile entity 10 that a trusted connection 30 is available in this specific situation. Therefore, in this case no security request has to be sent at all. The security request SR and the security answer SA steps according to figs. 3 and 4 can be totally avoided in this case due to the fact that based on the security information SI in the communication answer CA, the security process can be stopped from starting upfront.

Aforesaid description of the accompanying drawings is only by the way of detail and example. Specific features of each aspect of the present invention and of the figures can be combined with each other if of technical sense.

### REFERENCE SIGNS

- 10: mobile entity
- 20: data communication
- 30: trusted connection
- 40: Internet

- AP: access point
- CR: communication request
- CA: communication answer
- SR: securing request
- SA: securing answer
- SI: security information
- BI: blocking information
- II: identification information
- AS: authentication server

## Claims

1. Method of establishing a data communication (20) between a mobile entity (10) and the Internet (40) via an access point (AP) and a trusted connection (30), comprising the following steps:
- Sending a communication request (CR) from the mobile entity (10) to an authentication server (AS) via the trusted connection (30) requesting establishment of the data communication (20),
- Carrying out an authentication process of the mobile entity (10) at the authentication server (AS) based on the communication request (CR),
- Sending a communication answer (CA), to establish the data communication (20), via the trusted connection (30) from the authentication server (AS) to the mobile entity (10) based on the result of the authentication process,
- Blocking a securing process of securing the data communication (20), running on the trusted connection (30), at the mobile entity (10) based on the communication answer (CA),
**characterized in that**
the securing process is blocked before it has been started, and the securing process is blocked by the following steps:
- Sending a securing request (SR) from the mobile entity (10) to the authentication server (AS) via the trusted connection (30) requesting establishment of a secure communication tunnel, *as the securing process,*
- Comparing the security request (SR) with active data communication (20) via the trusted connection (30),
- Sending a securing answer (SA) from the authentication server (AS) to the mobile entity (10) to block the securing process.

2. Method according to claim 1, **characterized in that** the communication answer (CA) comprises a security information (SI) about the trusted connection (30) and the securing process is blocked based on this security information (SI).

3. Method according to claim 1, **characterized in that** the securing answer (SA) comprises a blocking information (BI) stopping the securing process from sending further securing requests (SR).

4. Method according to any of the preceding claims, **characterized in that** the authentication is carried out based on identification information (II) identifying the mobile entity (10) and being part of the communication and authentication request (CR).

5. Method according to any of the preceding claims, **characterized in that** the WiFi access point (AP) comprises a mobile backhaul network.

6. Method according to any of the preceding claims, **characterized in that** the blocking of the securing process comprises a step of comparing at least one parameter of the data communication (20) with a list, in particular a black or white list.

7. Computer program product being stored on a computer readable medium establishing a data communication (20) between a mobile entity (10) and the Internet (40) via an access point (AP) and a trusted connection (30), comprising the following:
- Computer readable program means, initiating a computer to send a communication request (CR) from the mobile entity (10) to an authentication server (AS) via the trusted connection (30) requesting establishment of the data communication (20),
- Computer readable program means, initiating the computer to carry out an authentication process of the mobile entity (10) at the authentication server (AS) based on the communication request (CR),
- Computer readable program means, initiating the computer to send a communication answer (CA), to establish the data communication (30), via the trusted connection (30) from the authentication server (AS) to the mobile entity (10) based on the result of the authentication process,
- Computer readable program means, initiating the computer to block a
securing process of securing the data communication (20), running on the trusted connection (30), at the mobile entity (10) based on the communication answer (CA),
**characterized in that**
the securing process is blocked before it has been started, and the securing process is blocked by the following steps:
- Sending a securing request (SR) from the mobile entity (10) to the authentication server (AS) via the trusted connection (30) requesting establishment of a secure communication tunnel, as the securing process,
- Comparing the security request (SR) with active data communication (20) via the trusted connection (30),
- Sending a securing answer (SA) from the authentication server (AS) to the mobile entity (10) to block the securing process.

8. Computer program product according to claim 7, **characterized in** computer readable program means, initiating the computer to carry out a method with the features of claims 2 to 6.

## Patentansprüche

1. Verfahren zum Aufbau einer Datenkommunikation (20) zwischen einer Mobileinheit (10) und dem Internet (40) über einen Zugangspunkt (AP) und eine gesicherte Verbindung (30), umfassend die folgenden Schritte:
- Senden einer Kommunikationsanfrage (CR), die den Aufbau der Datenkommunikation (20) anfragt, von der Mobileinheit (10) über die gesicherte Verbindung (30) an einen Authentifizierungsserver (AS),
- Durchführen eines Authentifizierungsprozesses der Mobileinheit (10) an dem Authentifizierungsserver (AS) basierend auf der Kommunikationsanfrage (CR),
- Senden einer Kommunikationsantwort (CA), um die Datenkommunikation (20) aufzubauen, von dem Authentifizierungsserver (AS) über die gesicherte Verbindung (30) an die Mobileinheit (10), basierend auf dem Ergebnis des Authentifizierungsprozesses,
- Blockieren, an der Mobileinheit (10), eines Absicherungsprozesses zum Absichern der Datenkommunikation (20), die auf der gesicherten Verbindung (30) abläuft, basierend auf der Kommunikationsantwort (CA),
**dadurch gekennzeichnet, dass**
der Absicherungsprozess blockiert wird, bevor er begonnen wurde, und dass der Absicherungsprozess durch die folgenden Schritte blockiert wird:
- Senden einer Absicherungsanfrage (SR) von der Mobileinheit (10), über die gesicherte Verbindung (30), die den Aufbau eines sicheren Kommunikationstunnels als den Absicherungsprozess anfragt, an den Authentifizierungsserver (AS),
- Vergleichen der Absicherungsanfrage (SR) mit einer aktiven Datenkommunikation (20) über die gesicherte Verbindung (30),
- Senden einer Absicherungsantwort (SA) von dem Authentifizierungsserver (AS) an die Mobileinheit (10), um den Absicherungsprozess zu blockieren.

2. Verfahren nach Anspruch 1, **dadurch gekennzeichnet, dass** die Kommunikationsantwort (CA) Sicherheitsinformationen (SI) über die gesicherte Verbindung (30) umfasst, und der Absicherungsprozess auf Grundlage dieser Sicherheitsinformationen (SI) blockiert wird.

3. Verfahren nach Anspruch 1, **dadurch gekennzeichnet, dass** die Absicherungsantwort (SA) eine Blockierinformation (BI) umfasst, die den Absicherungsprozess daran hindert, weitere Absicherungsanfragen (SR) zu versenden.

4. Verfahren nach einem der vorstehenden Ansprüche, **dadurch gekennzeichnet, dass** die Authentifizierung auf Grundlage von Identifikationsinformationen (II) durchgeführt wird, die die Mobileinheit (10) identifizieren und die Teil der Kommunikations- und Authentifizierungsanfrage (CR) sind.

5. Verfahren nach einem der vorstehenden Ansprüche, **dadurch gekennzeichnet, dass** der Wifi-Zugangspunkt (AP) ein mobiles Backhaul-Netzwerk ist.

6. Verfahren nach einem der vorstehenden Ansprüche, **dadurch gekennzeichnet, dass** das Blockieren des Absicherungsprozesses einen Schritt des Vergleichens von zumindest einem Parameter der Datenkommunikation (20) mit einer Liste, insbesondere einer schwarzen Liste oder weißen Liste, umfasst.

7. Computerprogrammprodukt, das auf einem computerlesbaren Medium gespeichert ist, und das über einen Zugangspunkt (AP) und eine gesichtete Verbindung (30) eine Datenkommunikation zwischen einer Mobileinheit (10) und dem Internet (40) herstellt, aufweisend:
- computerlesbare Programmmittel, die einen Computer initiieren, von der Mobileinheit (10) über die gesicherte Verbindung (30), eine Kommunikationsanfrage (CR) an einen Authentifizierungsserver (AS) zu senden, die den Aufbau der Datenkommunikation anfragt (20),
- computerlesbare Programmittel, die den Computer initiieren, einen Authentifizierungsprozess der Mobileinheit (10) an dem Authentifizierungsserver (AS) basierend auf der Kommunikationsanfrage (CR) durchzuführen,
- computerlesbare Programmittel, die den Computer initiieren, eine Kommunikationsantwort (CA) zu senden, um die Datenkommunikation (20) über die gesicherte Verbindung (30) von dem Authentifizierungsserver (AS) an die Mobileinheit (10) auf Grundlage des Ergebnisses des Authentifizierungsprozesses herzustellen,
- computerlesbare Programmittel, die den Computer initiieren, einen Absicherungsprozess zur Absicherung der Datenkommunikation (20), die auf der gesicherten Verbindung (30) läuft, basierend auf der Kommunikationsantwort (CA) an der Mobileinheit (10) zu blockieren,
**dadurch gekennzeichnet, dass**
der Sicherungsprozess blockiert wird, bevor er begonnen wurde, und der Absicherungsprozess durch die folgenden Schritte blockiert wird:
- Senden einer Absicherungsanfrage (SR) von der Mobileinheit (10), über die gesicherte Verbindung (30) an den Authentifizierungsserver (AS), die den Aufbau eines sicheren Kommunikationstunnels als den Absicherungsprozess anfragt,
- Vergleichen der Absicherungsanfrage (SR), über die gesicherte Verbindung (30), mit einer aktiven Datenkommunikation (20),
- Senden einer Absicherungsantwort (SA) von dem Authentifizierungsserver (AS) an die Mobileinheit (10), um den Absicherungsprozess zu blockieren.

8. Computerprogrammprodukt nach Anspruch 7, **gekennzeichnet durch** computerlesbare Programmittel, die den Computer initiieren, ein Verfahren mit den Merkmalen von einem der Ansprüche 2 bis 6 durchzuführen.

## Revendications

1. Procédé d'établissement d'une communication de données (20) entre une entité mobile (10) et l'Internet (40) par le biais d'un point d'accès (AP) et d'une connexion sécurisée (30), comprenant les étapes suivantes :
- envoi d'une demande de communication (CR) à partir de l'entité mobile (10) à un serveur d'authentification (AS) par le biais de la connexion sécurisée (30) requérant l'établissement de la communication de données (20),
- exécution d'un processus d'authentification de l'entité mobile (10) au niveau du serveur d'authentification (AS) d'après la demande de communication (CR),
- envoi d'une réponse de communication (CA), pour établir la communication de données (20), par le biais de la connexion sécurisée (30) à partir du serveur d'authentification (AS) à l'entité mobile (10) d'après le résultat du processus d'authentification,
- blocage d'un processus de sécurisation de la communication de données (20), fonctionnant sur la connexion sécurisée (30), au niveau de l'entité mobile (10) d'après la réponse de communication (CA),
**caractérisé en ce que**
le processus de sécurisation est bloqué avant d'avoir été lancé, et le processus de sécurisation est bloqué par les étapes suivantes :
- envoi d'une demande de sécurisation (SR) à partir de l'entité mobile (10) vers le serveur d'authentification (AS) par le biais de la connexion sécurisée (30) demandant l'établissement d'un tunnel de communication sécurisé, en tant que processus de sécurisation,
- comparaison de la demande de sécurisation (SR) avec une communication de données actives (20) par le biais de la connexion sécurisée (30),
- envoi d'une réponse de sécurisation (SA) à partir du serveur d'authentification (AS) vers l'entité mobile (10) pour bloquer le processus de sécurisation.

2. Procédé selon la revendication 1, **caractérisé en ce que** la réponse de communication (CA) comprend une information de sécurité (SI) concernant la connexion sécurisée (30) et le processus de sécurisation est bloqué d'après cette information de sécurité (SI).

3. Procédé selon la revendication 1, **caractérisé en ce que** la réponse de sécurisation (SA) comprend une information de blocage (BI) arrêtant l'envoi d'autres demandes de sécurisation (SR) par le processus de sécurisation.

4. Procédé selon l'une quelconque des revendications précédentes, **caractérisé en ce que** l'authentification est effectuée d'après des informations d'identification (II) identifiant l'entité mobile (10) et faisant partie de la demande de communication et d'authentification (CR).

5. Procédé selon l'une quelconque des revendications précédentes, **caractérisé en ce que** le point d'accès (AP) WiFi comprend un réseau de collecte mobile.

6. Procédé selon l'une quelconque des revendications précédentes, **caractérisé en ce que** le blocage du processus de sécurisation comprend une étape de comparaison d'au moins un paramètre de la communication de données (20) avec une liste, en particulier une liste noire ou blanche.

7. Produit de programme informatique stocké sur un support lisible par ordinateur établissant une communication de données (20) entre une entité mobile (10) et Internet (40) par le biais d'un point d'accès (AP) et d'une connexion sécurisée (30), comprenant ce qui suit :
- moyens de programme lisible par ordinateur, invitant l'ordinateur à envoyer une demande de communication (CR) par l'entité mobile (10) à un serveur d'authentification (AS) par le biais de la connexion sécurisée (30) demandant l'établissement de la communication de données (20),
- moyens de programme lisible par ordinateur, invitant l'ordinateur à effectuer un processus d'authentification de l'entité mobile (10) au niveau du serveur d'authentification (AS) d'après la demande de communication (CR),
- moyens de programme lisible par ordinateur, invitant l'ordinateur à envoyer une réponse de communication (CA), pour établir la communication de données (20), par le biais de la connexion sécurisée (30) à partir du serveur d'authentification (AS) à l'entité mobile (10) d'après le résultat du processus d'authentification,
- moyens de programme lisible par ordinateur, invitant l'ordinateur à bloquer un processus de sécurisation de la communication de données (20), fonctionnant sur la connexion sécurisée (30), au niveau de l'entité mobile (10) d'après la réponse de communication (CA),
**caractérisé en ce que**
le processus de sécurisation est bloqué avant d'avoir été lancé, et le processus de sécurisation est bloqué par les étapes suivantes :
- envoi d'une demande de sécurisation (SR) par l'entité mobile (10) au serveur d'authentification (AS) par le biais de la connexion sécurisée (30) demandant l'établissement d'un tunnel de communication sécurisé, en tant que processus de sécurisation,
- comparaison de la demande de sécurisation (SR) avec la communication de données actives (20) par le biais de la connexion sécurisée (30),
- envoi d'une réponse de sécurisation (SA) à partir du serveur d'authentification (AS) à l'entité mobile (10) pour bloquer le processus de sécurisation.

8. Produit de programme informatique selon la revendication 7, **caractérisé par** moyens de programme lisible par ordinateur invitant l'ordinateur à exécuter un procédé ayant les fonctions selon les revendications 2 à 6.
